# EUROPÄISCHE PATENTSCHRIFT

(11) **EP 1 760 012 B1**
(45) Veröffentlichungstag und Bekanntmachung des Hinweises auf die Patenterteilung: **23.07.2008**
(21) Anmeldenummer: 05024197.5
(22) Anmeldetag: 07.11.2005
(51) Int. Cl.: B65G 1/137, B65G 47/26

(54) **Verfahren und Vorrichtung zur Bereitstellung einer vorbestimmbaren Sequenz von Transportbehältern**
Method and device for arranging transport containers in a predetermined order
Procédé et dispositif pour arranger des conteneurs de transport selon un ordre prédeterminé

(30) Priorität: 02.09.2005 EP 05019157
(43) Veröffentlichungstag der Anmeldung: 07.03.2007
(73) Patentinhaber: Dematic GmbH & Co. KG, 63073 Offenbach (DE)
(72) Erfinder: Losenegger, Beat, 5630 Muri (CH); Stehr, Peter, 63179 Obertshausen (DE)
(74) Vertreter: Moser & Götze

(56) Entgegenhaltungen:
- EP-A1- 0 860 382
- EP-A1- 0 893 674
- DE-U1- 29 507 991
- JP-A- 4 298 412
- JP-A- 63 160 906
- JP-A- 2004 284 759
- US-A- 5 889 235

## Beschreibung

Die vorliegende Erfindung betrifft ein Verfahren und eine Vorrichtung zur Bereitstellung einer vorbestimmbaren Sequenz von Transportbehältern zu deren Weiterverarbeitung, beispielsweise an einer Kommissionierstation.

In logistischen Prozessen ist es eine häufig auftretende Anforderung, dass an einer Kommissionierstation zu entnehmende Artikel oder mit den gewünschten Artikeln befüllte Behälter in einer vorgegebenen festen oder auch dynamisch veränderbaren, aber dennoch vorbestimmbaren Sequenz zuzuführen sind.

EP 0860 382 A1 offenbart eine Vorrichtung zur Bereitstellung einer vorbestimmbaren Sequenz von Transportbehältern an einer Kommissionnierstation, mit einem ersten Tranportband zur Heranführung der Transportbehälter in weitgehend zufälliger Reihenfolge und einem in einem rechten Winkel zum ersten Transportband laufenden Stauband, auf welches die Transportbehälter von dem ersten Transportband überführbar sind. Die Transportbehälter werden nachfolgend in einem Sortierpuffer eingelagert und danach in der vorbestimmten Sequenz ausgelagert und an di Kommissionierstation herangeführt.

Derzeit bekannte Vorrichtungen sind heute nicht in der Lage, diese Anforderung effizient und platzsparend zu erfüllen.

Der vorliegenden Erfindung liegt daher die Aufgabe zugrunde, ein Verfahren und Vorrichtung anzugeben, mit denen es möglich ist, Transportbehälter mit einer vorbestimmbaren Sequenz von Transportbehältern zur weiteren Verarbeitung bereitzustellen.

Diese Aufgabe wird durch die im Patentanspruch 1 bzw. 7 angegebenen Massnahmen gelöst. Vorteilhafte Ausgestaltungen der Erfindung sind in weiteren Ansprüchen angegeben.

Der in den Ansprüchen verwendete Begriff der Weiterverarbeitungsstation soll im Sinne der vorliegenden Erfindung unter anderem als Kommissionierstation verstanden sein. An dieser Kommissionierstation soll es beispielsweise möglich sein, den Inhalt der Behälter ganz oder teilweise in der gewünschten Behältersequenz zu entnehmen und mit anderen Gebinden oder dergleichen weiter zu transportieren. An der Kommissionierstation soll es aber auch möglich sein, den Behälter mitsamt seines Inhalts beispielsweise manuell oder automatisch auf eine Palette zu stapeln, um auch hier die Sequenzierung der Behälter bei der Stapelung beizubehalten, was beispielsweise dann einer vorgegebenen Entladereihenfolge in einem Lebensmittelmarkt entsprechen kann.

Auf diese Weise ist es einfach möglich, durch die zwischenspeicherung der Behälter auf dem Stauband und die selektive Überführung der auf dem Stauband befindlichen Behälter auf das zweite Transportband die gewünschte Sequenz der Behälter einzustellen.

Vorteilhafte Ausgestaltungen der Erfindung können den übrigen Unteransprüchen entnommen werden.

So können u.a. der erste und der zweite Winkel im wesentlichen rechte Winkel sind, die im wesentlichen in der Ebene des ersten Transportbandes aufgespannt sind. Auf diese Weise kann die gesamte Förderung der Behälter im wesentlichen in einer Ebene liegend erfolgen. Zweckmässigerweise bietet sich natürlich eine im wesentlichen horizontal verlaufende Ebene an. Der Pusher ist sehr viel einfacher und betriebssicherer auszuführen als eine Auslagerung von Transportbehältern beispielsweise in einer vertikalen Richtung um die gewünschte Reihenfolge (Sequenzierung) erzielen zu können.

Die Erfindung wird nachfolgend anhand der Zeichnung beispielsweise näher erläutert. Dabei zeigen:
- Figur 1: eine schematische Aufsicht auf eine erste Vorrichtung; und
- Figur 2: eine schematische Aufsicht auf eine zweite Vorrichtung.

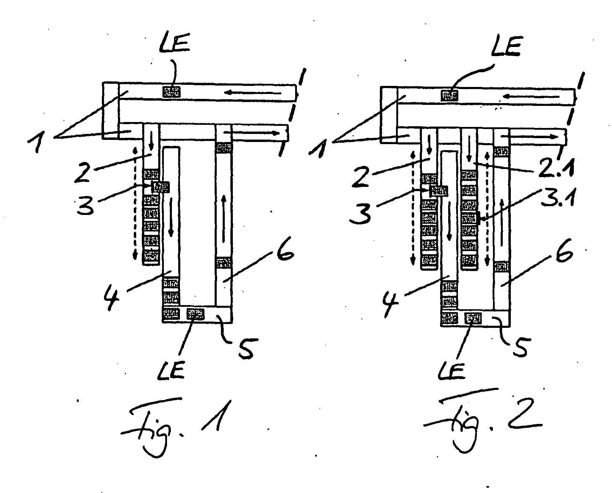

Figur 1 zeigt eine schematische Aufsicht auf eine erste Vorrichtung, die einen Umlauf 1, der sich in einer Vorzone eines hier nicht weiter dargestellten Miniload - Lagers befindet, zeigt. In diesem Umlauf 1 sind mindestens eine oder mehrere Kommissionierstationen 5 angeordnet. Eine Ladeeinheit LE, die aus dem Miniload - System ausgelagert wurde, gelangt über eine Reihe von Transportbändern 1, 2, 4 zur entsprechenden Kommissionierstation . Vom Umlauf 1 wird die Ladeeinheit LE auf einen Stauförderer 2 ausgeschleust (siehe Figur 1). Auf diesem Stauförderer 2 können zeitgleich mehrere Ladeeinheiten LE aufgestaut werden. Die Reihenfolge der Ladeeinheiten LE auf diesem Stauförderer 2 ist weitgehend willkürlich.

Um die Ladeeinheiten LE in einer vorgegebenen Reihenfolge an einem Kommissionierplatz 5 zu präsentieren, werden die Ladeeinheiten durch einen verfahrbaren Pusher 3 in der richtigen Sequenz vom Stauförderer 2 auf ein parallel zum Stauband 2 verlaufenden Förderer 4 transferiert. Der Förderer 4 transportiert die Ladeeinheiten LE zum Kommissionierplatz 5, wo die Artikelentnahme stattfindet. Nach erfolgter Artikelentnahme am Kommissionierplatz 5 wird die Ladeeinheit LE über einen weiteren Förderer 6 wieder dem Umlauf 1 zugeführt. Von dort kann die Ladeeinheit LE zurück zum Miniload - Lager oder zur nächsten Kommissionierstation transportiert werden. Die in diesem Ausführungsbeispiel vorgesehenen Transportbänder sind im wesentlich horizontal annähernd in einer Ebene liegend angeordnet, was konstruktionsmässig besonders einfach realisierbar ist und zum Beispiel die Verwendung eines einfach auszugestaltenden Pushers 3 zulässt. Grundsätzlich ist es aber auch möglich, dass eines oder mehrere der Transportbänder auch Steigungs- und/oder Gefälleabschnitte aufweisen.

Wie in Figur 2 gezeigt, ist es auch möglich, dass auf der anderen Seite des Förderers 4 eine zweite Staustrecke 2.1 mit zugehörigen Pusher 3.1 installiert werden kann. Es ist dabei auch möglich, dass ein verfahrbarer Pusher eingesetzt wird, der beide Staubahnen 2 und 2.1 bedienen kann. Auf diese Weise kann das in der Ebene verfügbare Platzangebot besonders gut genutzt werden, um möglichst viele Transporteinheiten, oder auch Ladeeinheiten LE genannt, auf den beiden Staubändern 2 und 2.1 zwischen zu puffern, um sie dann mittels des Pushers 3 oder einer vergleichbaren Vorrichtung zum Versetzen der Transporteinheiten auf das nächste Förderband zu geben, also beispielsweise auf den Förderer 4.

## Patentansprüche

1. Verfahren zur Bereitstellung einer vorbestimmbaren Sequenz von Transportbehältern (LE) an einer Weiterverarbeitungsstation (5), umfassend die folgenden Verfahrensschritte:
a) die Transportbehälter (LE) werden auf einem ersten Transportband (1) in weitgehend zufälliger Reihenfolge herangeführt und auf mindestens ein in einem ersten Winkel zum ersten Transportband (1) laufendes Stauband (2, 2.1) ausgeschleust; und
b) die Transportbehälter (LE) werden von dem Stauband (2, 2.1) in der vorbestimmten Sequenz mittels eines einzigen parallel zum Stauband (2, 2.1) verfahrbaren Pushers (3), auf ein zweites, parallel zum Stauband (2) verlaufendes Transportband (4) aufgegeben und an die Weiterverarbeitungsstation (5) herangeführt.

2. Verfahren nach Anspruch 1,
**dadurch gekennzeichnet, dass**
die Transportbehälter (LE) von dem zweiten Transportband (4) auf ein in einem winkel zum zweiten Transportband (4) verlaufendes drittes Transportband übergeführt und auf diesem dritten Transportband an die Weiterverarbeitungsstation herangeführt werden.

3. Verfahren nach Anspruch 2,
**dadurch gekennzeichnet, dass**
der Inhalt der Transportbehälter (LE) an der Weiterverarbeitungsstation entladen wird und die geleerten Transportbehälter anschliessend von dem dritten Transportband auf ein viertes in einem zweiten Winkel zum ersten Transportband laufendes Transportband (6) überführt werden und von dem vierten Transportband anschliessend auf ein im wesentlichen in der Richtung des ersten Transportbandes laufendes fünftes Transportband übertragen werden.

4. Verfahren nach Anspruch 3,
**dadurch gekennzeichnet, dass**
das erste und das fünfte Transportband ein und dasselbe Transportband sind und ein Umlaufband darstellen.

5. Verfahren nach Anspruch 3 oder 4, **dadurch gekennzeichnet, dass** der erste und der zweite Winkel im wesentlichen rechte Winkel sind, die im wesentlichen in der Ebene des ersten Transportbandes aufgespannt sind.

6. Verfahren nach einem der Ansprüche 2 bis 5,
**dadurch gekennzeichnet, dass**
das dritte Transportband im wesentlichen in der Richtung des ersten Transportbandes läuft.

7. Vorrichtung zur Bereitstellung einer vorbestimmbaren Sequenz von Transportbehältern an einer Weiterverarbeitungsstation, insbesondere Kommissionierstation, umfassend die folgenden Komponenten:
a) ein erstes Transportband (1) zur Heranführung der Transportbehälter (LE) in weitgehend zufälliger Reihenfolge und mindestens ein in einem ersten Winkel zum ersten Transportband (1) laufendes Stauband (2), auf welches die Transportbehälter (LE) von dem ersten Transportband (1) überführbar sind; und.
b) einen steuerbaren einzelnen und parallel zum Stauband (2) verfahrbaren (3) und ein zweites, parallel zum Stauband (2) verlaufendes Transportband (4), wobei der Pusher (3) die Transportbehälter (LB) in der vorbestimmten Sequenz von dem Stauband (2) auf das zweite Transportband (4) überführt; und
c) eine Weiterverarbeitungsstation (5), an welche die Transportbehälter (LE) nachfolgend in der vorbestimmbaren Sequenz heranführbar sind.

8. Vorrichtung nach Anspruch 7,
**dadurch gekennzeichnet, dass**
die Transportbehälter (LE) von dem zweiten Transportband (4) auf ein in einem Winkel zu zweiten Transportband verlaufendes drittes Transportband überführbar und auf diesem dritten Transportband an die Weiterverarbeitungsstation (5) heranführbar sind.

9. Vorrichtung nach Anspruch 8,
**dadurch gekennzeichnet, dass**
der Inhalt der Transportbehälter (LE) an der Weiterverarbeitungsstation entladbar ist und die geleerten Transportbehälter (LE) anschliessend von dem dritten Transportband auf ein viertes in einem zweiten Winkel zum ersten Transportband laufendes Transportband (6) überführbar und von dem vierten Transportband (6) anschliessend auf ein im wesentlichen in der Richtung des ersten Transportbandes laufendes fünftes Transportband übertragbar sind.

10. Vorrichtung nach Anspruch 9,
**dadurch gekennzeichnet, dass**
das erste und das fünfte Transportband ein und dasselbe Transportband (1) sind und ein Umlaufband darstellen.

11. Vorrichtung nach Anspruch 9 oder 10, **dadurch gekennzeichnet, dass** der erste und der zweite Winkel im wesentlichen rechte Winkel sind, die im wesentlichen in der Ebene des ersten Transportbandes aufgespannt sind.

12. Vorrichtung nach einem der Ansprüche 8 bis 11,
**dadurch gekennzeichnet, dass**
das dritte Transportband im wesentlichen in der Richtung des ersten Transportbandes (1) läuft.

## Claims

1. Method for providing a predeterminable sequence of transport containers (LE) at a further processing station (5), comprising the following method steps:
a) the transport containers (LE) are brought up on a first conveyor belt (1) in a largely random order and discharged onto at least one accumulating belt (2, 2.1), which runs at a first angle to the first conveyor belt (1); and
b) the transport containers (LE) are delivered from the accumulating belt (2, 2.1) in the predetermined sequence by means of a single pusher (3), which can travel parallel to the accumulating belt (2, 2.1), onto a second conveyor belt (4), which runs parallel to the accumulating belt (2), and brought up to the further processing station (5).

2. Method according to Claim 1,
**characterised in that**
the transport containers (LE) are transferred from the second conveyor belt (4) onto a third conveyor belt, which runs at an angle to the second conveyor belt (4), and brought on this third conveyor belt up to the further processing station.

3. Method according to Claim 2,
**characterised in that**
the contents of the transport containers (LE) are unloaded at the further processing station and the emptied transport containers are subsequently transferred from the third conveyor belt onto a fourth conveyor belt (6), which runs at a second angle to the first conveyor belt, and subsequently from the fourth conveyor belt onto a fifth conveyor belt, which runs substantially in the direction of the first conveyor belt.

4. Method according to Claim 3,
**characterised in that**
the first and the fifth conveyor belt are one and the same conveyor belt and represent a circulating belt.

5. Method according to Claim 3 or 4,
**characterised in that**
the first and the second angle are substantially right angles, which are spanned substantially in the plane of the first conveyor belt.

6. Method according to any one of Claims 2 to 5,
**characterised in that**
the third conveyor belt runs substantially in the direction of the first conveyor belt.

7. Device for providing a predeterminable sequence of transport containers at a further processing station, in particular an order-picking station, comprising the following components:
a) a first conveyor belt (1) for bringing up the transport containers (LE) in a largely random order and at least one accumulating belt (2), which runs at a first angle to the first conveyor belt (1) and onto which the transport containers (LE) can be transferred from the first conveyor belt (1); and
b) a controllable single pusher, which can travel parallel to the accumulating belt (2), and a second conveyor belt (4), which runs parallel to the accumulating belt (2), wherein the pusher (3) transfers the transport containers (LE) in the predetermined sequence from the accumulating belt (2) onto the second conveyor belt (4); and
c) a further processing station (5), up to which the transport containers (LE) can subsequently be brought in the predeterminable sequence.

8. Device according to Claim 7,
**characterised in that**
the transport containers (LE) can be transferred from the second conveyor belt (4) onto a third conveyor belt, which runs at an angle to the second conveyor belt, and brought on this third conveyor belt on this third conveyor belt up to the further processing station (5).

9. Device according to Claim 8,
**characterised in that**
the contents of the transport containers (LE) can be unloaded at the further processing station and the emptied transport containers (LE) can subsequently be transferred from the third conveyor belt onto a fourth conveyor belt (6), which runs at a second angle to the first conveyor belt, and subsequently from the fourth conveyor belt (6) onto a fifth conveyor belt, which runs substantially in the direction of the first conveyor belt.

10. Device according to Claim 9,
**characterised in that**
the first and the fifth conveyor belt are one and the same conveyor belt (1) and represent a circulating belt.

11. Device according to Claim 9 or 10,
**characterised in that**
the first and the second angle are substantially right angles, which are spanned substantially in the plane of the first conveyor belt.

12. Device according to any one of Claims 8 to 11,
**characterised in that**
the third conveyor belt runs substantially in the direction of the first conveyor belt (1).

## Revendications

1. Procédé de préparation d'une séquence, pouvant être prédéfinie, de conteneurs de transport (LE) au niveau d'une station de traitement ultérieur (5), ledit procédé comprenant les étapes opératoires suivantes :
a) les conteneurs de transport (LE) sont amenés sur une première bande transporteuse (1) dans un ordre quasi-aléatoire et sont déchargés sur au moins une bande d'engorgement (2, 2.1) circulant suivant un premier angle par rapport à la première bande transporteuse (1) ; et
b) les conteneurs de transport (LE) sont déposés suivant la séquence prédéfinie de la bande d'engorgement (2, 2.1) sur une deuxième bande transporteuse (4), circulant parallèlement à la bande d'engorgement (2), au moyen d'un unique poussoir (3) déplaçable parallèlement à la bande d'engorgement (2, 2.1) et sont amenés à la station de traitement ultérieur (5).

2. Procédé selon la revendication 1, **caractérisé en ce que** les conteneurs de transport (LE) sont transférés de la deuxième bande transporteuse (4) sur une troisième bande transporteuses circulant suivant un certain angle par rapport à la deuxième bande transporteuse (4) et sont amenés à la station de traitement ultérieur sur cette troisième bande transporteuse.

3. Procédé selon la revendication 2, **caractérisé en ce que** le contenu des conteneurs de transport (LE) est déchargé à la station de traitement ultérieur et les conteneurs de transport vidés sont transférés ensuite de la troisième bande transporteuse sur une quatrième bande transporteuse (6) circulant suivant un deuxième angle par rapport à la première bande transporteuse puis sont transférés de la quatrième bande transporteuse sur une cinquième bande transporteuse circulant sensiblement dans la direction de la première bande transporteuse.

4. Procédé selon la revendication 3, **caractérisé en ce que** les première et cinquième bandes transporteuses sont une et même bande transporteuse et forment une bande en circuit fermé.

5. Procédé selon la revendication 3 ou 4, **caractérisé en ce que** les premier et deuxième angles sont sensiblement des angles droits qui s'étendent sensiblement dans le plan de la première bande transporteuse.

6. Procédé selon l'une des revendications 2 à 5, **caractérisé en ce que** la troisième bande transporteuse circule sensiblement dans la direction de la première bande transporteuse.

7. Dispositif de préparation d'une séquence, pouvant être prédéfinie, de conteneurs de transport au niveau d'une station de traitement ultérieur, notamment d'une station de préparation de commandes, ledit dispositif comportant les composants suivants :
a) une première bande transporteuse (1) destinée à amener les conteneurs de transport (LE) dans un ordre quasi-aléatoire et au moins une bande d'engorgement (2) qui circule suivant un premier angle par rapport à la première bande transporteuse (1) et sur laquelle les conteneurs de transport (LE) peuvent être transférés de la première bande transporteuse (1) ; et
b) un unique poussoir (3) pouvant être commandé et déplaçable parallèlement à la bande d'engorgement (2) et une deuxième bande transporteuse (4) s'étendant parallèlement à la bande d'engorgement (2), le poussoir (3) transférant les conteneurs de transport (LE) suivant la séquence prédéfinie de la bande d'engorgement (2) sur la deuxième bande transporteuse (4) ; et
c) une station de traitement ultérieur (5) à laquelle les conteneurs de transport (LE) peuvent être amenés successivement suivant la séquence pouvant être prédéfinie.

8. Dispositif selon la revendication 7, **caractérisé en ce que** les conteneurs de transport (LE) peuvent être transférés de la deuxième bande transporteuse (4) sur une troisième bande transporteuse s'étendant avec un certain angle par rapport à la deuxième bande transporteuse et peuvent être amenés sur cette troisième bande transporteuse à la station de traitement ultérieur (5).

9. Procédé selon la revendication 8, **caractérisé en ce que** le contenu des conteneurs de transport (LE) peut être déchargé à la station de traitement ultérieur et les conteneurs de transport (LE) vidés peuvent être transférés ensuite de la troisième bande transporteuse sur une quatrième bande transporteuse (6) circulant avec un deuxième angle par rapport à la première bande transporteuse puis peuvent être transférés de la quatrième bande transporteuse (6) sur une cinquième bande transporteuse circulant sensiblement dans la direction de la première bande transporteuse.

10. Procédé selon la revendication 9, **caractérisé en ce que** les première et cinquième bandes transporteuses sont une et même bande transporteuse et forment une bande en circuit fermé.

11. Procédé selon la revendication 9 ou 10, **caractérisé en ce que** les premier et deuxième angles sont sensiblement des angles droits qui s'étendent sensiblement dans le plan de la première bande transporteuse.

12. Procédé selon l'une des revendications 8 à 11, **caractérisé en ce que** la troisième bande transporteuse circule sensiblement dans la direction de la première bande transporteuse.
